# EUROPEAN PATENT SPECIFICATION

(11) **EP 3 809 265 B1**
(45) Date of publication and mention of the grant of the patent: **04.05.2022**
(21) Application number: 20206015.8
(22) Date of filing: 01.02.2013
(51) Int. Cl.: G06F 9/50

(54) **COMMUNICATIONS MANAGEMENT**
KOMMUNIKATIONSVERWALTUNG
GESTION DE COMMUNICATIONS

(43) Date of publication of application: 21.04.2021
(62) Divisional of application: 19203212.6
(73) Proprietor: Amadeus S.A.S., 06410 Biot (FR)
(72) Inventor: DERSY, Julien, GUILDFORD, GU3 1AQ (GB); ORTON, David, AMERSHAM BUCKS, HP6 6BQ (GB)
(74) Representative: Marks & Clerk France

(56) References cited:
- WO-A1-2011/022375
- US-A1- 2009 043 921
- US-A1- 2009 164 990
- US-B1- 8 032 353

## Description

### Field of the Invention

The present invention relates to communications management and is more particularly, although not exclusively, concerned with the management of communication between peripheral devices within a virtualised communications system for airports.

### Background to the Invention

In airport communication systems, a peripheral manager containing device drivers forms part of a client computer system which is geographically local to and is directly connected to one or more peripherals via a local communications system. Such a peripheral manager is constrained in establishing communications with central server-based applications due to the use of non-static internet protocol (IP) addresses and the requirement for IP address translation when the communication needs to traverse networks comprising a mix of public and private addressing schemes.

Within airport environments, workstations (including thin client devices, mobile/tablet devices) and peripheral devices may be shared for multiple airline usage. However, different airlines tend to utilise different systems and a problem arises where the same peripheral devices need to communicate with those different systems. One way of providing such communication requires the adaptation of existing client applications and print emulators to target remote hostnames in conjunction with addressing schemes based on fixed IP addresses. However, this is problematic for a number of reasons, including: the limited availability of public IP addresses; the complexity associated with security, firewalls and mobile data modes where 3G and/or 4G networks are used; the need for many routing configurations that need to be established and effectively managed; and the need to manage multiple stakeholders providing different elements of the communications, for example, airport authorities, network providers, airport information technology providers etc.

US-B-8032353 describes a bridged computer system in which a host computer executes peripheral driver software associated with a remote client computer and communications between the host computer and the remote client is processed using peripheral emulation of an audio codec. Audio signals are communicated between the host and remote computer using network interfaces provided in both the host and the remote computer. In the host computer, an audio interface is provided which connects to a communications network, and, in the remote computer, interfaces are provided for connecting to speakers and a microphone associated with the remote computer. In one embodiment, a peripheral emulator including an audio controller emulator and a codec emulator is provided in the host computer for connecting to the host computer network interface, the peripheral emulator implementing transcoding functions, such as, compression of outbound audio data samples and/or decompression of inbound audio samples. At the remote computer, a link interface is provided which terminates audio links by providing a physical interface, bus transceiver logic and transport layer termination, the link interface transmitting output audio data and commands, receiving input audio data and responses, communicating codec control information to codec modules, distributing a sample clock, executing a power mode state machine, and providing bus reset and initialisation functions. Registers associated with the link interface maintain the configuration states of the codec modules and these registers are emulated at the host computer so that audio software on the host computer has rapid access to codec state information during driver initialisation or when the remote computer is disconnected. In another embodiment, a peripheral interface including a peripheral emulator in the host computer is connected to the network, and a peripheral controller is provided in the remote computer for controlling a peripheral. The peripheral emulator in this case interacts with the driver software to emulate the interface of the peripheral. The peripheral interface interacts through the network with the peripheral controller within the remote client computer, the peripheral controller comprising a remote driver or other software and/or hardware for coupling to the peripheral.

However, whilst the system described in US-B-8032353 uses peripheral emulation in a peripheral interface in the host computer, interfaces need to be provided on both sides of the communications network to convert the audio signals into and from appropriate data signals for transmittal over the communications network. Whilst this can readily be implemented over a known communications network, it is difficult to implement this over different types of networks where the communications network is not known, and more importantly, where several different types of networks need to be negotiated in a single communications link.

In systems where a host computer is required to be in communication with a remote client computer, multiple addressing schemes and translation across heterogeneous local and wide area networks, including mobile carrier networks, are required to enable communications between the host computer and the remote client computer. In this case, it is difficult to establish a reliable link irrespective of the multiple addressing schemes and the different types of networks required for the necessary communication.

Patent application US 2009/043921 A1 (ROY) relates to a method and system for virtualisation and redirection of input/output connections to peripheral devices in which PCI/PCIe level functions are used. Virtualisation may comprise emulating peripheral device controllers where PCI/PCIe level function redirects the access to one or more peripheral devices to corresponding virtual devices.

Patent application WO 2011/022375 A1 (APRIUS, INC.) relates to an input/output virtualisation system which provides a mechanism for sharing resources between a number of host computers using a managed transport fabric. A single device is shared across the numerous host systems within the system so that input/output virtualisation and host-to-host communication services can be provided to the host computers.

Patent application US 2009/164990 A1 (BEN-YEHUDA, BORKENHAGEN) relates to a method for deciding at run time which input/output mechanism virtual machine should be using at any point in time, as well as a method for seamlessly switching between the different input/output mechanisms to the one most appropriate at that point in time.

### Summary of the Invention

It is therefore an object of the present invention to provide a server and a method for remotely operating at least one peripheral device communicatively to at least one terminal as defined by the independent claims.

Specific embodiments are defined by the dependent claims.

### Brief Description of the Drawings

For a better understanding of the present invention, reference will now be made, by way of example only, to the accompanying drawings in which:-
Figure 1 illustrates a block diagram of a server in accordance with the present invention;
Figure 2 is similar to Figure 1 but illustrates another configuration of the server in accordance with the present invention;
Figure 3 illustrates a block diagram of a client in accordance with the present invention;
Figure 4 illustrates a block diagram of a system in accordance with the present invention utilising the server of Figure 2 and the client of Figure 3;
Figure 5 illustrates a block diagram of a system in accordance with the present invention which comprises a server and a plurality of clients; and
Figure 6 is a flow chart illustrating the steps of operation of the system shown in Figure 4.

### Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

The term "server" as used herein is intended to include any host computer that can connect to a communications network. In addition, the term "server" is also used to identify elements within the server.

The terms "remote client computer" or "client" as used herein are intended to include any computer or terminal that can connect to a server via a communications network. The term "client" is also used to identify elements within a remote client computer.

The term "emulator" as used herein refers to hardware or software that duplicates (emulates) the functions of a first computer system (for example, a client computer) in a second computer system (for example, a host computer) to provide an exact reproduction of the behaviour of the first computer system.

The term "simulator" as used herein refers to a hardware or software that provides a representation of the operation of a physical system over time using a model representing key characteristics and/or behaviours of the physical system.

The present invention is capable of exploitation by airports and any other parties that are involved in the provision of shared infrastructure to users in airport environments, including but not limited to, use in check-in and boarding areas, baggage claim desks and airline back offices. In addition, the present invention can also be utilised in non-airport environments.

This present invention provides a method for managing the communication with peripheral devices, such as printers, scanners and readers, deployed within an airport environment via a virtualised communications protocol extended over a network. Such a network may comprise of heterogeneous network types, including local area networks and wide area networks, the latter including fixed networks or 3G/4G data communications networks. (3G relates to the third generation of mobile communications for mobile telephones and comprises CDMA2000, a family of protocols that use code division multiple access systems, and Universal Mobile Telecommunications System (UMTS). CDMA is also known as International Mobile Telecommunications Multi-Carrier (IMT-MC). 4G relates to the fourth generation which provides mobile ultra-broadband internet access using, for example, Long Term Evolution (LTE).)

In particular, a method will be described which overcomes the challenges associated with communication between a remote central server and peripheral devices associated with airport-based clients where the communication may include multiple addressing schemes and translation across heterogeneous local and wide area networks, including mobile carrier networks. As mentioned above, the present invention can be implemented in any system in which communication is to be established where multiple addressing schemes are needed between a remote central server and a local client and associated peripheral devices.

In the system of the present invention, a server is in communication with at least one remote client computer. A peripheral manager simulator simulates a peripheral manager on the server to communicate with a client peripheral manager in each remote client computer. The peripheral manager simulator preferably comprises a server peripheral manager simulator component and a client peripheral manager simulator component between which the virtual channel is established. The server peripheral manager simulator component and the client peripheral manager simulator component work together to simulate application communication from the server to each remote client computer so that the peripheral manager associated with each remote client computer can control the operation of its associated peripheral devices. Additionally, the virtual channel can also be used for data transfer between a peripheral device connected to the client and the server. In effect, the virtual channel is bi-directional.

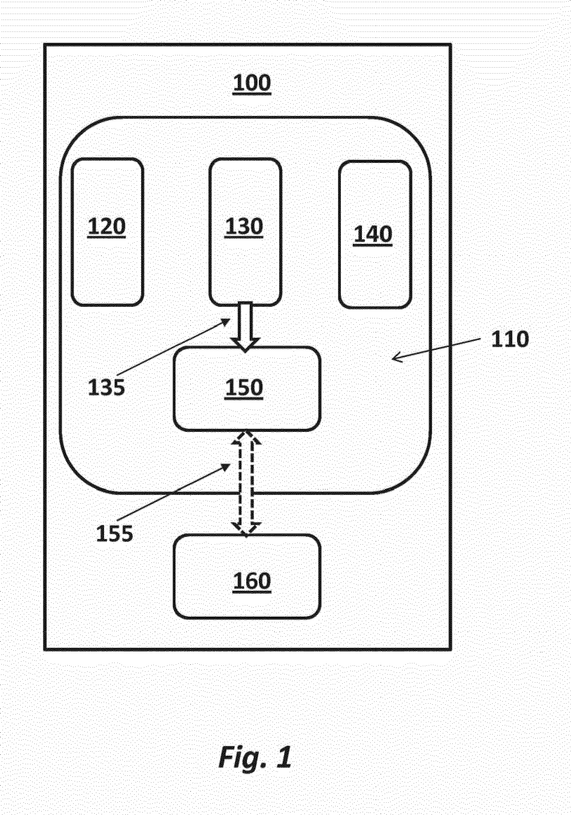

Referring initially to Figure 1, a server 100 in accordance with the present invention is shown which has a server-based application virtualisation platform 110. A plurality of applications 120, 130, 140 are shown running on the server 100 but which are virtualised on the application virtualisation platform 110. An emulator 150, for example, a print emulator, is associated with one particular application 130, for example, a print application. The application 130 interfaces with the print emulator 150 via connection 135 to provide print instructions for a peripheral device, for example, a printer (not shown) located at the location of the client.

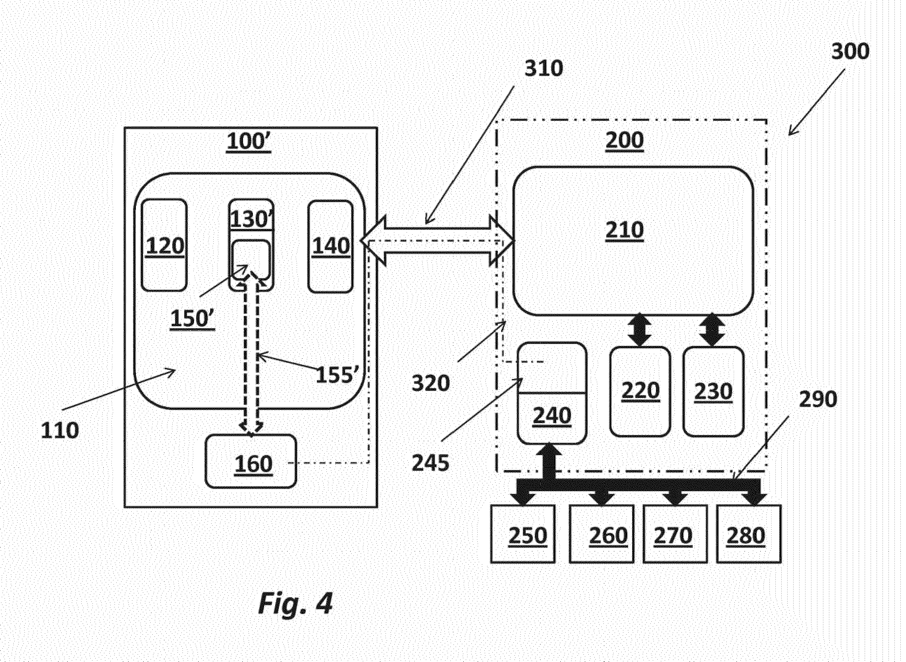

In accordance with the present invention, a server peripheral manager simulator component 160 is provided at the server 100, the server peripheral manager simulator component 160 interfacing with the print emulator 150 via connection 155. The operation of the server 100 within the system of the present invention will be described in more detail with reference to Figures 4 to 6 below.

The application virtualisation platform 110 includes software which virtualises the applications 120, 130, 140 or an operation system (not shown) on which each application runs. The server peripheral manager simulator component 160 simulates a peripheral manager (as will be described in more detail below) to enable local communications with the application emulator 150, in this case, the print emulator. A Common Use Passenger Processing System (CUPPS) or any other suitable interface type may be provided which enables communication between the print emulator and the server peripheral manager simulator component 160. (CUPPS is effectively the next generation of Common Use Terminal Equipment (CUTE) in accordance with IATA Recommended Practice 1797.)

In the embodiment of the server 100 shown in Figure 1, the application emulator 150 (or print emulator) is located within the application virtualisation platform 110. It may be connected to more than one application (not shown) if similar or identical applications are running on the server 100 and which require the same type of application emulation.

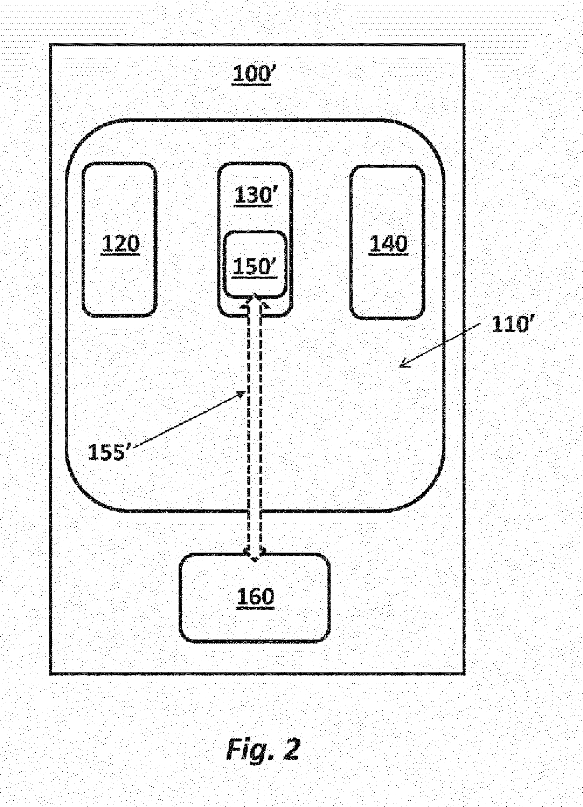

In Figure 2, a modified embodiment of the server 100' is shown. Elements which have been described above with reference to Figure 1 have the same reference numerals and will not be described in detail again. In the embodiment of Figure 2, the application virtualisation platform 110' has been modified so that the print emulator 150' forms part of the application 130' itself and interfaces with the server peripheral manager simulator component 160 via connection 155'. In this case, a suitable interface is provided to enable communications between the print (or application) emulator 150' and the server peripheral manager simulator component 160.

In a further embodiment (not shown), the server peripheral manager simulator component may be embedded in the application itself.

In an airport implementation, the server 100 (or 100') is located remotely from the airport itself and is connected thereto by means of conventional communications links. A single server 100 (or 100') may be connected to more than one airport as well as to different areas, for example, check-in, boarding gates, baggage halls and other airport front and/or back offices.

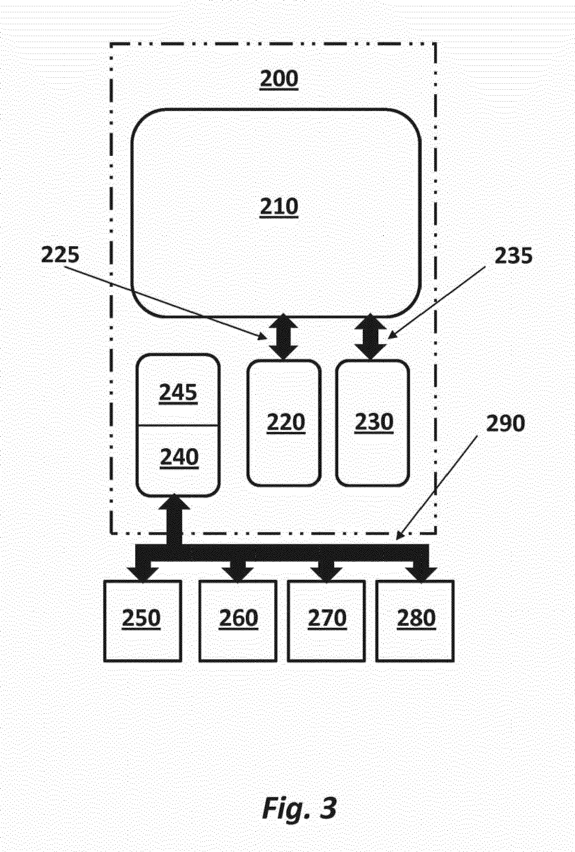

Figure 3 illustrates a client 200 which is connectable to the server 100 (Figure 1) or server 100' (Figure 2) as will be described in more detail below with reference to Figures 4 to 6. The client 200 has a client virtualisation platform 210 which interfaces with a keyboard 220 and a display 230 as shown by respective links 225, 235. Although the keyboard 220 and display 230 are shown as separate elements, they may form part of a single module (not shown). The client 200 also includes a peripheral manager 240 which is connected for controlling peripheral devices 250, 260, 270, 280 via link 290. Typical peripheral devices which may be controlled by the peripheral manager 240 include, but are not limited to, printers, scanners, and readers. Whilst link 290 may be a physical link, for example, using a universal serial bus (USB) connection, the link 290 may also be a wireless link forming part of a local area network (LAN) or a wide area network (WAN). It is also possible that the link 290 operates using mobile telecommunications, for example, forming part of a 3G or 4G network or is connected via Bluetooth. (Bluetooth is a wireless technology standard managed by the Bluetooth Special Interest Group.)

In accordance with the present invention, a client peripheral manager simulator component 245 is provided which is associated with the client peripheral manager 240. The client peripheral manager simulator component 245 is used to form a virtual channel (not shown) with the server peripheral manager simulator component 160 (Figures 1 and 2) as will be described in more detail below.

In an airport environment, a plurality of clients 200 would be provided within the airport itself, for example, at check-in desks, at boarding gates, in baggage halls etc. Each client 200 connects to the remote server 100 (or 100') to access applications running on the application virtualisation platform 110 (or 110') provided in the server 100 (or 100') as will be described in more detail below.

In Figure 4, a virtualisation system 300 in accordance with the present invention is shown. The system 300 comprises the server 100' as shown in Figure 2, but it will be appreciated that this is by way of example and the server 100 shown in Figure 1 could also be used. Elements of the server 100' as described above have the same reference numerals and will not be described in detail again here. The system 300 also includes the client 200 which is connected to the server 100' via a communications link 310. Communications link 310 may comprise a WAN or a LAN communications system which is capable of running a virtualisation protocol. As shown, the communications link 310 effectively connects the application virtualisation platform 110' to the client virtualisation platform 210. In particular, the communications link 310 comprises an internet protocol (IP) connection. In one embodiment, the virtualisation protocol utilises Citrix XenServer on the server and Citrix XenApp on each remote client computer to provide the respective virtualisation platforms. (Citrix, XenServer and XenApp are trademarks of Citrix Systems Inc. of Fort Lauderdale, Florida, USA.) However, it will be appreciated that other virtualisation protocols may be used, for example, VMWare, and Citrix applications are given by way of example. (VMWare is a trademark of VMWare Inc. of Palo Alto, California, USA.)

In addition, in accordance with the present invention, the communications link 310 effectively connects the server peripheral manager simulator component 160 with the client peripheral manager simulator component 245 forming part of the client peripheral manager 240 using a virtual channel 320 as indicated by dot-dash line as will be described in more detail below.

The client virtualisation platform 210 includes software which allows communications with the server 100 via the application virtualisation platform 110' and manages the delivery of the virtualised application or operating system to the peripheral manager 240 at the client 200. The peripheral manager 240 includes suitable device drivers (not shown) for each peripheral device 250, 260, 270, 280.

The client peripheral simulator component 245 enables communication between the client virtualisation platform 210 and the peripheral manager 240. As shown, the client peripheral manager simulator component 245 can be embedded within the peripheral manager 240. Alternatively, the client peripheral manager simulator component 245 may stand alone within the client 200 (not shown).

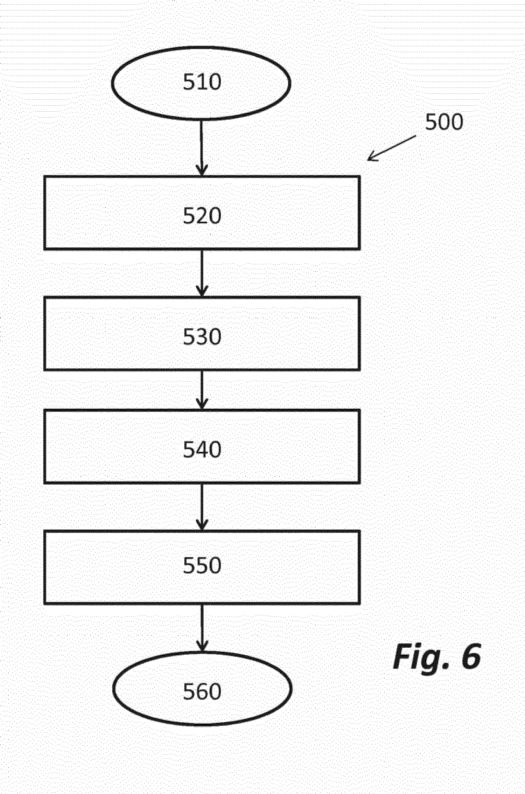

In accordance with the present invention, the provision of the server peripheral manager simulator component 160 and the client peripheral manager simulator component 245 enables the virtualisation of the system as will be described below with reference to Figure 6. Although not shown in Figure 4, it is to be noted that the virtual channel 320 extends through the communications link 310 via the application virtualisation platform 110' and the client virtualisation platform 210.

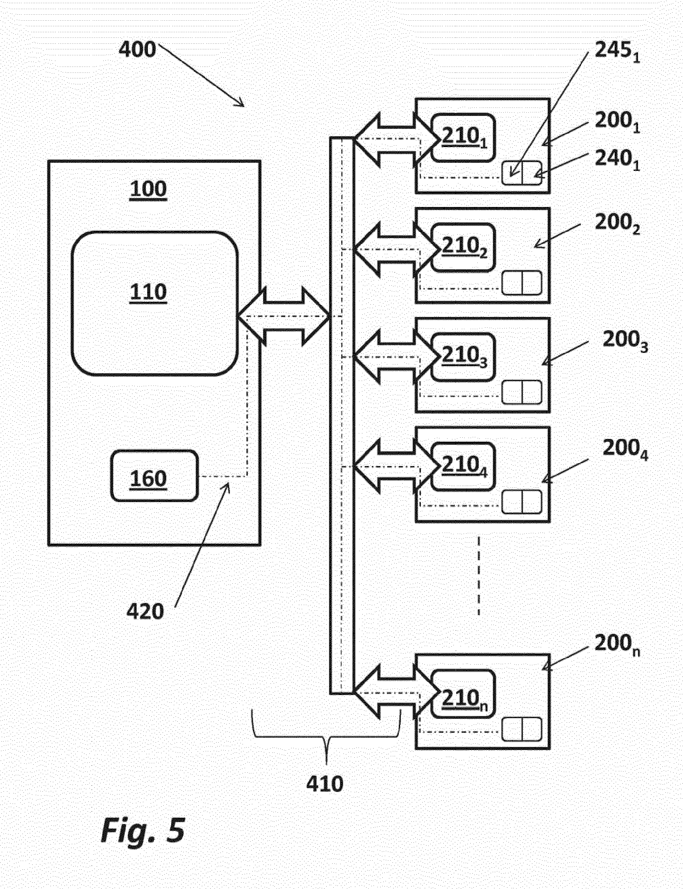

Figure 5 illustrates a system 400 in which a plurality of clients 200₁, 200₂, 200₃, 200₄, ..., 200ₙ are connected to a single server 100. Each client 200₁, 200₂, 200₃, 200₄, ..., 200ₙ has its own client virtualisation platform 210₁, 210₂, 210₃, 210₄, ..., 210ₙ and own client peripheral manager and client peripheral manager simulator component. For clarity, only the client peripheral manager 240₁ and client peripheral manager simulator component 245₁ for one client 200₁ is referenced, but it will be appreciated that the other clients also have client peripheral manager and client peripheral manager simulator components as shown.

The server 100 may be located at a central remote location and each client 200₁, 200₂, 200₃, 200₄, ..., 200ₙ may be located at any suitable location. For example, clients may be located at one airport or at a plurality of different airports all over the globe. As described above, the clients could also be located at locations, for example, at hotels or conference centres, where passengers can check-in prior to leaving for the airport.

As shown, a communications link 410 may be established between each of the clients 200₁, 200₂, 200₃, 200₄, ..., 200ₙ at the same time. A virtual channel 420 is also shown extending between the client peripheral manager simulator component 245₁ and the server peripheral manager simulator component 160. Although not shown in Figure 5, it is to be noted that the virtual channel 420 extends through the communications link 410 via the application virtualisation platform 110 and the client virtualisation platform 210.

Naturally, a virtual channel can also be established for the other client peripheral manager simulator components of each client 200₁, 200₂, 200₃, 200₄, ..., 200ₙ. Each client 200₁, 200₂, 200₃, 200₄, ..., 200ₙ may access the same application at the same time, or alternatively, more than one application may be accessed by the same or different clients. It will be appreciated that each client 200₁, 200₂, 200₃, 200₄, ..., 200ₙ accesses the server 100 via its own dedicated virtual channel within the communications link 410, that is, a plurality of virtual channels can be established between the server peripheral manager simulator 160 and each client 200₁, 200₂, 200₃, 200₄, ..., 200ₙ via the link 410.

By hosting all applications to be used by the clients on a common server, updates need only be applied once on the server without recourse to any of the clients. This reduces the complexity of keeping individual clients running the same application(s) up-to-date. In addition, as different applications can be hosted, in an airport environment, different airlines or other users of the system can use different applications but still use the same remote client computer to access their applications on the server.

In Figure 6, a flow chart 500 illustrating the basic steps of a method for operating the system is shown. Reference numerals relating to elements of the server 100' (Figure 2), the client 200 (Figure 3) and the system 300 (Figure 4) are also used in the following description. The flow chart 500 comprises four basic steps in addition to "start", step 510, and "end", step 560.

In step 510, a user logs onto the client using the keyboard 220 and the display 230 and initiates a session in which the client 200 is connected to the server 100' via communications link 310 (Figure 4). The connection between the client and the server initialises at least one graphic user interface (GUI) for one of more applications on the server 100' by calling the IP address of the server 100'. At the same time, the server peripheral simulator component 160 is also initialised.

In step 520, the connection 310 is made between the client virtualisation platform 210 and the application virtualisation platform 110' on the server 100. A connection is established for the session via the virtualisation protocol according to the platform used, for example, using Citrix as described above, provided on the two platforms 110', 210 in step 530. Support for virtual channels within this protocol enables communications with peripherals to be reliably established and which are unaffected by network address translation and blocking due to the presence of firewalls.

In step 540, the client localhost/Transmission Control Protocol (TCP) is virtualised on the client virtualisation platform 210 and made available, via the connection 310 established in step 530, to the application 130' running on the virtualised platform 110' on the server 100'. In step 550, the virtual channel 320 is established between the initialised server peripheral manager simulator component 160 and the client peripheral manager simulator component 245. The application 130' connects to the client localhost/TCP made available on the application virtualisation platform 110' in step 540, is virtualised and redirected via the virtual channel 320 back to the client peripheral manager 240 via the client peripheral manager simulator component 245.

Once the virtual channel 320 is established, all communication between the application 130' and the peripheral device with which it is to communicate is performed via the virtual channel 320, that is, all data is transferred over the virtual channel 320, either from the server 100' to the client 200 or from the client 200 to the server 100'.

The virtual channel 320 can be established regardless of the type(s) of communications network(s) operating within the communications link 310 and effectively provides a channel of direct communication between the application 130' running on the application virtualisation platform 110' and one of the peripheral devices 250, 260, 270, 280 connected to the client 200 via link 290. As described above, the application 130' may be a print application and the peripheral device connected to the client 200 may be a printer.

Naturally, other functionality may be provided by the peripheral devices, for example, scanning or reading. In this case, the scan or read is passed back from the relevant peripheral device 250,260, 270, 280 via link 290 to the server peripheral manager simulator component 160, via the associated client peripheral manager 240, the client peripheral manager simulator component 245 and the virtual channel 320. From the server peripheral manager simulator component 160, the scan or read is passed to an associated application within the application virtualisation platform 110'. The information relating to the scan or read may then be stored in a database or memory (not shown) if required.

In step 560, the session ends when the connection between the server 100' and the client 200 is terminated when the user logs off the client 200.

As described above, the server peripheral manager simulator component is launched each time the virtualised application is launched, that is, every time a client connects to the server. However, it is also possible to have a single server peripheral manager simulator component which provides a connection port for each instance of the virtualised application being launched on the server in response to the connection of a client with the server. The latter option is not preferred as all connections between clients and the server will be lost if the server peripheral manager simulator needs to be restarted for whatever reason.

A peripheral emulator is described above which is associated with the application on the server which needs to connect to a peripheral device on the client. However, this is not essential and its functionality can be included in the server peripheral manager simulator component.

Although the present invention has been described with reference to an airport environment in which airport-related applications are run with each client corresponding to a check-in terminal, for example, connected to a single server, it will be appreciated that the present invention can also be used in non-airport environments irrespective of worldwide location, for example, cruise liner terminals, ferry terminals, hotels, resorts and conference centres, that is, any application where multiple clients need to establish a connection with a server to access the same application over a communications link having multiple addressing schemes and translation across heterogeneous local and wide area networks, including mobile carrier networks, to enable communications between applications running on the server and peripheral devices associated with the clients.

## Claims

1. A server (100) for remotely operating at least one peripheral device (250; 260; 270; 280) communicatively coupled to at least one terminal (200; 200₁; 200₂; 200₃; 200₄) located at an airport, the server (100) comprising:
an application virtualization platform (110; 110') configured to:
execute at least one application (120; 130; 130'; 140);
communicate with a first terminal (200; 200₁) via a communication link (310; 410), wherein the first terminal (200; 200₁) is communicatively coupled to a first peripheral device (250; 260; 270; 280); and
establish a first session, via the communication link (310; 410), with the first terminal (200; 200₁), the first session being suitable for interacting with a first instance of the at least one application (120; 130; 130'; 140); and
a server peripheral manager simulator (160) configured to establish a first virtual channel (320; 420) in the communication link (310; 410) between the server peripheral manager simulator (160) and a first client peripheral manager simulator (245; 245₁) at the first terminal (200; 200₁) in response to the first session being established;
wherein:
the application virtualization platform (110; 110') is further configured to communicate data associated with the operation of the first peripheral device (250; 260; 270; 280) between the at least one application (120; 130; 130'; 140) and the first peripheral device (250; 260; 270; 280) via the server peripheral manager simulator (160) and the first virtual channel (320; 420).

2. A server (100) according to claim 1 wherein the application virtualization platform (110; 110') further comprises an emulator (150; 150') configured to duplicate a functionality of the first peripheral device (250; 260; 270; 280).

3. A server (100) according to claim 2 wherein a first application (130') of the at least one application (120; 130; 130'; 140) comprises the emulator (150').

4. A server (100) according to claim 2 wherein the emulator (150) is communicatively coupled to the at least one application (120; 130; 130'; 140).

5. A server (100) according to claim 2 wherein the server peripheral manager (160) comprises the emulator.

6. A server (100) according to claim 1 wherein:
the application virtualization platform (110; 110') is further configured to:
communicate with a second terminal (200₂; 200₃; 200₄) via the communication link (410), the second terminal (200₂; 200₃; 200₄) communicatively coupled to a second peripheral device; and
establish a second session, via the communication link (410), with the second terminal, the second session being suitable for interacting with a second instance of the at least one application (120; 130; 130'; 140);
the server (100) further configured to establish a second virtual channel in the communication link (410) to a second client peripheral manager simulator at the second terminal (200; 200₁) in response to the second session being established;
wherein:
the application virtualization platform (110; 110') is further configured to communicate data associated with the operation of the second peripheral device between the at least one application (120; 130; 130'; 140) and the second peripheral device via the second virtual channel.

7. A server (100) according to claim 6, wherein the server (100) is further configured to:
launch a second server peripheral manager simulator in response to establishing the second session, the second server peripheral manager communicatively coupled to the second client peripheral manager in the second terminal (200₂; 200₃; 200₄) via the second virtual channel; and wherein
the application virtualization platform (110; 110') is further configured to communicate data associated with the operation of the second peripheral device between the at least one application (120; 130; 130'; 140) and the second peripheral device via the second server peripheral manager simulator.

8. A server (100) according to claim 6 wherein the server peripheral manager (160) comprises a first output port connected to the first virtual channel (420), and a second output port connected to the second virtual channel, and wherein the application virtualization platform (110; 110') is further configured to:
communicate data associated with the operation of the first peripheral device (250; 260; 270; 280) between the at least one application (120; 130; 130'; 140) and the first peripheral device (250; 260; 270; 280) via the first output port; and
communicate data associated with the operation of the second peripheral device between the at least one application (120; 130; 130'; 140) and the second peripheral device via the second output port.

9. A server (100) according to claim 6 wherein the application virtualization platform is configured to communicate data associated with the operation of the second peripheral device between a first application and the second peripheral device via the second virtual channel.

10. A method, performed by a server (100), for remotely operating at least one peripheral device (250; 260; 270; 280) communicatively coupled to at least one terminal (200; 200₁; 200₂; 200₃; 200₄) located at an airport, the server comprising an application virtualization platform (110; 110') and a server peripheral manager simulator (160), the method comprising:
executing, by the application virtualization platform (110; 110'), at least one application (120; 130; 130'; 140);
communicating, by the application virtualization platform (110; 110'), with a first terminal (200; 200₁) via a communication link (310; 410), wherein the first terminal (200; 200₁) is communicatively coupled to a first peripheral device;
establishing, by the application virtualization platform (110; 110'), a first session, via the communication link (310; 410) with the first terminal (200; 200₁), the first session being suitable for interacting with a first instance of the at least one application (120; 130; 130'; 140); and
establishing, by the server peripheral manager simulator (160), a first virtual channel (320; 420) in the communication link (310; 410) between the server peripheral manager simulator (160) and a first client peripheral manager simulator (245; 245₁) at the first terminal (200; 200₁) in response to the first session being established;
wherein the method further comprises:
communicating, by the application virtualization platform (110; 110'), data associated with the operation of the first peripheral device (250; 260; 270; 280) between the at least one application (120; 130; 130'; 140) and the first peripheral device (250; 260; 270; 280) via the server peripheral manager simulator (160) and the first virtual channel (320; 420).

11. A method according to claim 10 wherein the application virtualization platform (110; 110') further comprises an emulator (150; 150') configured to duplicate a functionality of the first peripheral device (250; 260; 270; 280).

12. A method according to claim 10 wherein the method further comprises:
communicating, by the application virtualization platform (110; 110'), with a second terminal (200₂; 200₃; 200₄) via the communication link (410), the second terminal (200₂; 200₃; 200₄) communicatively coupled to a second peripheral device;
establishing, by the application virtualization platform (110; 110'), a second session via the communication link (410) with the second terminal, the second session being suitable for interacting with a second instance of the at least one application (120; 130; 130'; 140);
establishing a second virtual channel in the communication link (410) to a second client peripheral manager simulator at the second terminal (200₂; 200₃; 200₄) in response to the second session being established;
mwherein the method further comprises:
communicating, by the application virtualization platform (110; 110') data associated with the operation of the second peripheral device between the at least one application (120; 130; 130'; 140) and the second peripheral device via the second virtual channel.

13. A method according to claim 12 further comprising:
launching a second server peripheral manager simulator in response to establishing the second session, the second server peripheral manager communicatively coupled to the second client peripheral manager in the second terminal via the second virtual channel; and
communicating, by the application virtualization platform (110; 110'), data associated with the operation of the second peripheral device between the at least one application (120; 130; 130'; 140) and the second peripheral device via the second server peripheral manager.

14. A method according to claim 12 wherein the server peripheral manager (160) comprises a first output port connected to the first virtual channel (420), and a second output port connected to the second virtual channel, and wherein the method further comprises:
communicating, the application virtualization platform (110; 110'), data associated with the operation of the first peripheral device (250; 260; 270; 280) between the at least one application (120; 130; 130'; 140) and the first peripheral device (250; 260; 270; 280) via the first output port; and
communicating, by the application virtualization platform (110; 110'), data associated with the operation of the second peripheral device between the at least one application (120; 130; 130'; 140) and the second peripheral device via the second output port.

15. A computer program comprising instructions which, when the program is executed by a computer, cause the computer to carry out the method of claim 10.

## Patentansprüche

1. Server (100) zum Fernbedienen mindestens einer Peripherievorrichtung (250; 260; 270; 280), die an mindestens eine Endeinrichtung (200; 200₁; 200₂; 200₃; 200₄) kommunikativ gekoppelt ist, angeordnet in einem Flughafen, der Server (100) umfassend:
eine Anwendungsvirtualisierungsplattform (110; 110'), konfiguriert zum:
Ausführen mindestens einer Anwendung (120; 130; 130'; 140);
Kommunizieren mit einer ersten Endeinrichtung (200; 200₁) über eine Kommunikationsverbindung (310; 410), wobei die erste Endeinrichtung (200; 200₁) an eine erste Peripherievorrichtung (250; 260; 270; 280) kommunikativ gekoppelt ist; und
Einrichten einer ersten Sitzung über die Kommunikationsverbindung (310; 410) mit der ersten Endeinrichtung (200; 200₁), wobei die erste Sitzung zum Interagieren mit einer ersten Instanz der mindestens einen Anwendung (120; 130; 130'; 140) geeignet ist; und
einen Serverperipherieverwaltersimulator (160), konfiguriert zum Einrichten eines ersten virtuellen Kanals (320; 420) in der Kommunikationsverbindung (310; 410) zwischen dem Serverperipherieverwaltersimulator (160) und einem ersten Clientperipherieverwaltersimulator (245; 245₁) an der ersten Endeinrichtung (200; 200₁) als Reaktion darauf, dass die erste Sitzung eingerichtet wird;
wobei:
die Anwendungsvirtualisierungsplattform (110; 110') ferner konfiguriert ist zum Kommunizieren von Daten, die mit dem Betrieb der ersten Peripherievorrichtung (250; 260; 270; 280) verknüpft sind, zwischen der mindestens einen Anwendung (120; 130; 130'; 140) und der ersten Peripherievorrichtung (250; 260; 270; 280) über den Serverperipherieverwaltersimulator (160) und den ersten virtuellen Kanal (320; 420).

2. Server (100) nach Anspruch 1, wobei die Anwendungsvirtualisierungsplattform (110; 110') ferner einen Emulator (150; 150') umfasst, konfiguriert zum Duplizieren einer Funktionalität der ersten Peripherievorrichtung (250; 260; 270; 280).

3. Server (100) nach Anspruch 2, wobei eine erste Anwendung (130') der mindestens einer Anwendung (120; 130; 130'; 140) den Emulator (150') umfasst.

4. Server (100) nach Anspruch 2, wobei der Emulator (150) an die mindestens eine Anwendung (120; 130; 130'; 140) kommunikativ gekoppelt ist.

5. Server (100) nach Anspruch 2, wobei der Serverperipherieverwalter (160) den Emulator umfasst.

6. Server (100) nach Anspruch 1, wobei:
die Anwendungsvirtualisierungsplattform (110; 110') ferner konfiguriert ist zum:
Kommunizieren mit einer zweiten Endeinrichtung (200₂; 200₃; 200₄) über die Kommunikationsverbindung (410), wobei die zweite Endeinrichtung (200₂; 200₃; 200₄) an eine zweite Peripherievorrichtung kommunikativ gekoppelt ist; und
Einrichten einer zweiten Sitzung über die Kommunikationsverbindung (410) mit der zweiten Endeinrichtung, wobei die zweite Sitzung zum Interagieren mit einer zweiten Instanz der mindestens einen Anwendung (120; 130; 130'; 140) geeignet ist;
der Server (100) ferner konfiguriert ist zum Einrichten eines zweiten virtuellen Kanals in der Kommunikationsverbindung (410) zu einem zweiten Clientperipherieverwaltersimulator an der zweiten Endeinrichtung (200; 200₁) als Reaktion darauf, dass die zweite Sitzung eingerichtet wird;
wobei:
die Anwendungsvirtualisierungsplattform (110; 110') ferner konfiguriert ist zum Kommunizieren von Daten, die mit dem Betrieb der zweiten Peripherievorrichtung verknüpft sind, zwischen der mindestens einen Anwendung (120; 130; 130'; 140) und der zweiten Peripherievorrichtung über den zweiten virtuellen Kanal.

7. Server (100) nach Anspruch 6, wobei der Server (100) ferner konfiguriert ist zum:
Starten eines zweiten Serverperipherieverwaltersimulators als Reaktion auf Einrichten der zweiten Sitzung, wobei der zweite Serverperipherieverwalter an den zweiten Clientperipherieverwalter in der zweiten Endeinrichtung (200₂; 200₃; 200₄) über den zweiten virtuellen Kanal kommunikativ gekoppelt ist; und wobei
die Anwendungsvirtualisierungsplattform (110; 110') ferner konfiguriert ist zum Kommunizieren von Daten, die mit dem Betrieb der zweiten Peripherievorrichtung verknüpft sind, zwischen der mindestens einen Anwendung (120; 130; 130'; 140) und der zweiten Peripherievorrichtung über den zweiten Serverperipherieverwaltersimulator.

8. Server (100) nach Anspruch 6, wobei der Serverperipherieverwalter (160) einen ersten Ausgangsanschluss, der mit dem ersten virtuellen Kanal (420) verbunden ist, und einen zweiten Ausgangsanschluss, der mit dem zweiten virtuellen Kanal verbunden ist, umfasst und wobei die Anwendungsvirtualisierungsplattform (110; 110') ferner konfiguriert ist zum:
Kommunizieren von Daten, die mit dem Betrieb der ersten Peripherievorrichtung (250; 260; 270; 280) verknüpft sind, zwischen der mindestens einen Anwendung (120; 130; 130'; 140) und der ersten Peripherievorrichtung (250; 260; 270; 280) über den ersten Ausgangsanschluss; und
Kommunizieren von Daten, die mit dem Betrieb der zweiten Peripherievorrichtung verknüpft sind, zwischen der mindestens einen Anwendung (120; 130; 130'; 140) und der zweiten Peripherievorrichtung über den zweiten Ausgangsanschluss.

9. Server (100) nach Anspruch 6, wobei die Anwendungsvirtualisierungsplattform konfiguriert ist zum Kommunizieren von Daten, die mit dem Betrieb der zweiten Peripherievorrichtung verknüpft sind, zwischen einer ersten Anwendung und der zweiten Peripherievorrichtung über den zweiten virtuellen Kanal.

10. Verfahren, durchgeführt durch einen Server (100), zum Fernbedienen mindestens einer Peripherievorrichtung (250; 260; 270; 280), die an mindestens eine Endeinrichtung (200; 200₁; 200₂; 200₃; 200₄) kommunikativ gekoppelt ist, angeordnet in einem Flughafen, der Server umfassend eine Anwendungsvirtualisierungsplattform (110; 110') und einen Serverperipherieverwaltersimulator (160), das Verfahren umfassend:
Ausführen, durch die Anwendungsvirtualisierungsplattform (110; 110'), mindestens einer Anwendung (120; 130; 130'; 140);
Kommunizieren, durch die Anwendungsvirtualisierungsplattform (110; 110'), mit einer ersten Endeinrichtung (200; 200₁) über eine Kommunikationsverbindung (310; 410), wobei die erste Endeinrichtung (200; 200₁) an eine erste Peripherievorrichtung kommunikativ gekoppelt ist;
Einrichten, durch die Anwendungsvirtualisierungsplattform (110; 110'), einer ersten Sitzung über die Kommunikationsverbindung (310; 410) mit der ersten Endeinrichtung (200; 200₁), wobei die erste Sitzung zum Interagieren mit einer ersten Instanz der mindestens einen Anwendung (120; 130; 130'; 140) geeignet ist; und
Einrichten, durch den Serverperipherieverwaltersimulator (160), eines ersten virtuellen Kanals (320; 420) in der Kommunikationsverbindung (310; 410) zwischen dem Serverperipherieverwaltersimulator (160) und einem ersten Clientperipherieverwaltersimulator (245; 245₁) an der ersten Endeinrichtung (200; 200₁) als Reaktion darauf, dass die erste Sitzung eingerichtet wird;
wobei das Verfahren ferner umfasst:
Kommunizieren, durch die Anwendungsvirtualisierungsplattform (110; 110'), von Daten, die mit dem Betrieb der ersten Peripherievorrichtung (250; 260; 270; 280) verknüpft sind, zwischen der mindestens einen Anwendung (120; 130; 130'; 140) und der ersten Peripherievorrichtung (250; 260; 270; 280) über den Serverperipherieverwaltersimulator (160) und den ersten virtuellen Kanal (320; 420).

11. Verfahren nach Anspruch 10 wobei die Anwendungsvirtualisierungsplattform (110; 110') ferner einen Emulator (150; 150') umfasst, konfiguriert zum Duplizieren einer Funktionalität der ersten Peripherievorrichtung (250; 260; 270; 280).

12. Verfahren nach Anspruch 10, wobei das Verfahren ferner umfasst:
Kommunizieren, durch die Anwendungsvirtualisierungsplattform (110; 110'), mit einer zweiten Endeinrichtung (200₂; 200₃; 200₄) über die Kommunikationsverbindung (410), wobei die zweite Endeinrichtung (200₂; 200₃; 200₄) an eine zweite Peripherievorrichtung kommunikativ gekoppelt ist;
Einrichten, durch die Anwendungsvirtualisierungsplattform (110; 110'), einer zweiten Sitzung über die Kommunikationsverbindung (410) mit der zweiten Endeinrichtung, wobei die zweite Sitzung zum Interagieren mit einer zweiten Instanz der mindestens einen Anwendung (120; 130; 130'; 140) geeignet ist;
Einrichten eines zweiten virtuellen Kanals in der Kommunikationsverbindung (410) zu einem zweiten Clientperipherieverwaltersimulator an der zweiten Endeinrichtung (200₂; 200₃; 200₄) als Reaktion darauf, dass die zweite Sitzung eingerichtet wird;
wobei das Verfahren ferner umfasst:
Kommunizieren, durch die Anwendungsvirtualisierungsplattform (110; 110'), von Daten, die mit dem Betrieb der zweiten Peripherievorrichtung verknüpft sind, zwischen der mindestens einen Anwendung (120; 130; 130'; 140) und der zweiten Peripherievorrichtung über den zweiten virtuellen Kanal.

13. Verfahren nach Anspruch 12 ferner umfassend:
Starten eines zweiten Serverperipherieverwaltersimulators als Reaktion auf Einrichten der zweiten Sitzung, wobei der zweite Serverperipherieverwalter an den zweiten Clientperipherieverwalter in der zweiten Endeinrichtung über den zweiten virtuellen Kanal kommunikativ gekoppelt ist; und
Kommunizieren, durch die Anwendungsvirtualisierungsplattform (110; 110'), von Daten, die mit dem Betrieb der zweiten Peripherievorrichtung verknüpft sind, zwischen der mindestens einen Anwendung (120; 130; 130'; 140) und der zweiten Peripherievorrichtung über den zweiten Serverperipherieverwalter.

14. Verfahren nach Anspruch 12, wobei der Serverperipherieverwalter (160) einen ersten Ausgangsanschluss, der mit dem ersten virtuellen Kanal (420) verbunden ist, und einen zweiten Ausgangsanschluss, der mit dem zweiten virtuellen Kanal verbunden ist, umfasst und wobei das Verfahren ferner umfasst:
Kommunizieren, durch die Anwendungsvirtualisierungsplattform (110; 110'), von Daten, die mit dem Betrieb der ersten Peripherievorrichtung (250; 260; 270; 280) verknüpft sind, zwischen der mindestens einen Anwendung (120; 130; 130'; 140) und der ersten Peripherievorrichtung (250; 260; 270; 280) über den ersten Ausgangsanschluss; und
Kommunizieren, durch die Anwendungsvirtualisierungsplattform (110; 110'), von Daten, die mit dem Betrieb der zweiten Peripherievorrichtung verknüpft sind, zwischen der mindestens einen Anwendung (120; 130; 130'; 140) und der zweiten Peripherievorrichtung über den zweiten Ausgangsanschluss.

15. Computerprogrammprodukt, Anweisungen umfassend, die, wenn das Programm durch einen Computer ausgeführt wird, den Computer veranlassen, das Verfahren nach Anspruch 10 auszuführen.

## Revendications

1. Serveur (100) pour faire fonctionner à distance au moins un dispositif périphérique (250 ; 260 ; 270 ; 280) couplé en communication à au moins un terminal (200 ; 200₁ ; 200₂ ; 200₃ ; 200₄) situé dans un aéroport, le serveur (100) comprenant :
une plate-forme de virtualisation d'applications (110 ; 110') configurée pour :
exécuter au moins une application (120 ; 130 ; 130' ; 140) ;
communiquer avec un premier terminal (200 ; 200₁) via une liaison de communication (310 ; 410), dans lequel le premier terminal (200 ; 200₁) est couplé en communication à un premier dispositif périphérique (250 ; 260 ; 270 ; 280) ; et
établir une première session, via la liaison de communication (310 ; 410), avec le premier terminal (200 ; 200₁), la première session étant adaptée pour interagir avec une première instance de ladite au moins une application (120 ; 130 ; 130' ; 140) ; et
un simulateur de gestionnaire de périphériques de serveur (160) configuré pour établir un premier canal virtuel (320 ; 420) dans la liaison de communication (310 ; 410) entre le simulateur de gestionnaire de périphériques de serveur (160) et un premier simulateur de gestionnaire de périphériques client (245 ; 245₁) au niveau du premier terminal (200 ; 200₁) en réponse à l'établissement de la première session ;
dans lequel :
la plate-forme de virtualisation d'applications (110 ; 110') est en outre configurée pour communiquer des données associées au fonctionnement du premier dispositif périphérique (250 ; 260 ; 270 ; 280) entre ladite au moins une application (120 ; 130 ; 130' ; 140) et le premier dispositif périphérique (250 ; 260 ; 270 ; 280) via le simulateur de gestionnaire de périphériques de serveur (160) et le premier canal virtuel (320 ; 420).

2. Serveur (100) selon la revendication 1, dans lequel la plate-forme de virtualisation d'applications (110 ; 110') comprend en outre un émulateur (150 ; 150') configuré pour dupliquer une fonctionnalité du premier dispositif périphérique (250 ; 260 ; 270 ; 280).

3. Serveur (100) selon la revendication 2, dans lequel une première application (130') de ladite au moins une application (120 ; 130 ; 130' ; 140) comprend l'émulateur (150').

4. Serveur (100) selon la revendication 2, dans lequel l'émulateur (150) est couplé en communication à ladite au moins une application (120 ; 130 ; 130' ; 140).

5. Serveur (100) selon la revendication 2, dans lequel le simulateur de gestionnaire de périphériques de serveur (160) comprend l'émulateur.

6. Serveur (100) selon la revendication 1, dans lequel :
la plate-forme de virtualisation d'applications (110 ; 110') est en outre configurée pour :
communiquer avec un second terminal (200₂ ; 200₃ ; 200₄) via la liaison de communication (410), le second terminal (200₂ ; 200₃ ; 200₄) étant couplé en communication à un second dispositif périphérique ; et
établir une seconde session, via la liaison de communication (410), avec le second terminal, la seconde session étant appropriée pour interagir avec une seconde instance de ladite au moins une application (120 ; 130 ; 130' ; 140) ;
le serveur (100) étant en outre configuré pour établir un second canal virtuel dans la liaison de communication (410) vers un second simulateur de gestionnaire de périphériques client au niveau du second terminal (200 ; 200₁), en réponse à l'établissement de la seconde session ;
dans lequel :
la plate-forme de virtualisation d'applications (110 ; 110') est en outre configurée pour communiquer des données associées au fonctionnement du second dispositif périphérique entre ladite au moins une application (120 ; 130 ; 130' ; 140) et le second dispositif périphérique, via le second canal virtuel.

7. Serveur (100) selon la revendication 6, dans lequel le serveur (100) est en outre configuré pour :
lancer un second simulateur de gestionnaire de périphériques de serveur en réponse à l'établissement de la seconde session, le second gestionnaire de périphériques de serveur étant couplé en communication au second gestionnaire de périphériques client dans le second terminal (200₂ ; 200₃ ; 200₄) via le second canal virtuel ; et dans lequel
la plate-forme de virtualisation d'applications (110 ; 110') est en outre configurée pour communiquer des données associées au fonctionnement du second dispositif périphérique entre ladite au moins une application (120 ; 130 ; 130' ; 140) et le second dispositif périphérique, via le second simulateur de gestionnaire de périphériques de serveur.

8. Serveur (100) selon la revendication 6, dans lequel le gestionnaire de périphériques de serveur (160) comprend un premier port de sortie connecté au premier canal virtuel (420), et un second port de sortie connecté au second canal virtuel, et dans lequel la plate-forme de virtualisation d'applications (110 ; 110') est en outre configurée pour :
communiquer des données associées au fonctionnement du premier dispositif périphérique (250 ; 260 ; 270 ; 280) entre ladite au moins une application (120 ; 130 ; 130' ; 140) et le premier dispositif périphérique (250 ; 260 ; 270 ; 280), via le premier port de sortie ; et
communiquer des données associées au fonctionnement du second dispositif périphérique entre ladite au moins une application (120 ; 130 ; 130' ; 140) et le second dispositif périphérique, via le second port de sortie.

9. Serveur (100) selon la revendication 6, dans lequel la plate-forme de virtualisation d'applications est configurée pour communiquer des données associées au fonctionnement du second dispositif périphérique entre une première application et le second dispositif périphérique, via le second canal virtuel.

10. Procédé, mis en œuvre par un serveur (100), pour faire fonctionner à distance au moins un dispositif périphérique (250 ; 260 ; 270 ; 280) couplé en communication à au moins un terminal (200 ; 200₁ ; 200₂ ; 200₃ ; 200₄) situé dans un aéroport, le serveur comprenant une plate-forme de virtualisation d'applications (110 ; 110') et un simulateur de gestionnaire de périphériques de serveur (160), le procédé comprenant les étapes consistant à :
exécuter, par le biais de la plate-forme de virtualisation d'applications (110 ; 110'), au moins une application (120 ; 130 ; 130' ; 140) ;
communiquer, par le biais de la plate-forme de virtualisation d'applications (110 ; 110'), avec un premier terminal (200 ; 200₁), via une liaison de communication (310 ; 410), dans lequel le premier terminal (200 ; 200₁) est couplé en communication à un premier dispositif périphérique ;
établir, par le biais de la plate-forme de virtualisation d'applications (110 ; 110'), une première session, via la liaison de communication (310 ; 410) avec le premier terminal (200 ; 200₁), la première session étant appropriée pour interagir avec une première instance de ladite au moins une application (120 ; 130 ; 130' ; 140) ; et
établir, par le biais du simulateur de gestionnaire de périphériques de serveur (160), un premier canal virtuel (320 ; 420), dans la liaison de communication (310 ; 410) entre le simulateur de gestionnaire de périphériques de serveur (160) et un premier simulateur de gestionnaire de périphériques client (245 ; 245₁) au niveau du premier terminal (200 ; 200₁), en réponse à l'établissement de la première session ;
dans lequel le procédé comprend en outre l'étape consistant à :
communiquer, par le biais de la plate-forme de virtualisation d'applications (110 ; 110'), des données associées au fonctionnement du premier dispositif périphérique (250 ; 260 ; 270 ; 280) entre ladite au moins une application (120 ; 130 ; 130' ; 140) et le premier dispositif périphérique (250 ; 260 ; 270 ; 280), via le simulateur de gestionnaire de périphériques de serveur (160) et du premier canal virtuel (320 ; 420).

11. Procédé selon la revendication 10, dans lequel la plateforme de virtualisation d'applications (110 ; 110') comprend en outre un émulateur (150 ; 150') configuré pour dupliquer une fonctionnalité du premier dispositif périphérique (250 ; 260 ; 270 ; 280).

12. Procédé selon la revendication 10, dans lequel le procédé comprend en outre les étapes consistant à :
communiquer, par le biais de la plate-forme de virtualisation d'applications (110 ; 110'), avec un second terminal (200₂ ; 200₃ ; 200₄), via la liaison de communication (410), le second terminal (200₂ ; 200₃ ; 200₄) étant couplé en communication à un second dispositif périphérique ;
établir, par le biais de la plate-forme de virtualisation d'applications (110 ; 110'), une seconde session, via la liaison de communication (410), avec le second terminal, la seconde session étant adaptée pour interagir avec une seconde instance de ladite au moins une application (120 ; 130 ; 130' ; 140) ;
établir un second canal virtuel dans la liaison de communication (410) vers un second simulateur de gestionnaire de périphériques client, au niveau du second terminal (200₂ ; 200₃ ; 200₄), en réponse à l'établissement de la seconde session ;
dans lequel le procédé comprend en outre l'étape consistant à :
communiquer, par le biais de la plate-forme de virtualisation d'applications (110 ; 110'), des données associées au fonctionnement du second dispositif périphérique entre ladite au moins une application (120 ; 130 ; 130' ; 140) et le second dispositif périphérique, via le second canal virtuel.

13. Procédé selon la revendication 12, comprenant en outre les étapes ci-dessous consistant à :
lancer un second simulateur de gestionnaire de périphériques de serveur en réponse à l'établissement de la seconde session, le second gestionnaire de périphériques de serveur étant couplé en communication au second gestionnaire de périphériques client dans le second terminal, via le second canal virtuel ; et
communiquer, par le biais de la plate-forme de virtualisation d'applications (110 ; 110'), des données associées au fonctionnement du second dispositif périphérique entre ladite au moins une application (120 ; 130 ; 130' ; 140) et le second dispositif périphérique, via le second gestionnaire de périphériques de serveur.

14. Procédé selon la revendication 12, dans lequel le gestionnaire de périphériques de serveur (160) comprend un premier port de sortie connecté au premier canal virtuel (420), et un second port de sortie connecté au second canal virtuel, et dans lequel le procédé comprend en outre les étapes consistant à :
communiquer, par le biais de la plate-forme de virtualisation d'applications (110 ; 110'), des données associées au fonctionnement du premier dispositif périphérique (250 ; 260 ; 270 ; 280) entre ladite au moins une application (120 ; 130 ; 130' ; 140) et le premier dispositif périphérique (250 ; 260 ; 270 ; 280), via le premier port de sortie ; et
communiquer, par le biais de la plate-forme de virtualisation d'applications (110 ; 110'), des données associées au fonctionnement du second dispositif périphérique entre ladite au moins une application (120 ; 130 ; 130' ; 140) et le second dispositif périphérique, via le second port de sortie.

15. Programme informatique comprenant des instructions qui, lorsque le programme est exécuté par un ordinateur, amènent l'ordinateur à mettre en œuvre le procédé selon la revendication 10.
